# EUROPEAN PATENT APPLICATION

(11) **EP 0 802 002 A1**
(43) Date of publication of application: **22.10.1997**
(21) Application number: 97200950.0
(22) Date of filing: 01.04.1997
(51) Int. Cl.: B21D 39/04, F16L 13/14, F16L 13/16

(54) **Method for sealedly joining a flanged coupling onto a pipeline**

(30) Priority: 18.04.1996 IT MI960742
(71) Applicant: Snam S.p.A., 20097 San Donato Milanese (Milano) (IT)
(72) Inventor: Colombo, Adalberto, 20067 PAULLO ( Milano ) (IT); Vienna, Arrigo, 20132 Milano (IT)
(74) Representative: Zanardo, Giovanni

(57) **Abstract**

A method for sealedly joining a flanged coupling to a pipeline, comprising the successive steps of creating within the pipeline a sealed chamber in correspondence with the coupling to be joined, pumping water or another liquid into said chamber to very high pressure, and continuing said compression until the coupling is brought to its elastic deformation limit while the pipeline deforms plastically, and finally lowering the pressure within the chamber.

## Description

This invention relates to a method which by enabling a flanged coupling and a pipeline to be sealedly connected together in a rapid, economical, comfortable and effective manner, enables damaged pipelines to be quickly repaired even when these are laid at great sea depth.

The cycle of operations necessary for repairing a damaged pipeline is known to comprise cutting away the damaged portion, then sealedly joining an external flanged coupling to each of the thus freed ends of the sound pipeline portions, to enable said sound portions of the pipeline to be joined together by a pipe piece sealedly clamped between said flanged couplings.

Various methods for sealedly joining a flanged coupling to a pipe without having to use costly and lengthy welding are known in the art.

One of said known methods is to make the joint by explosion, ie by plastically expanding the tube and the coupling by explosive charges suitably located within the pipe.

However besides being highly dangerous, such a method is unreliable because of the extreme difficulty of positioning the explosive charges most effectively within the pipe. Moreover, its application to great sea depths of 600 metres or more, at which our method has effectively to operate and for which it has been expressly conceived, would be very complicated and hence costly in that inter alia it would require the emptying of the water contained in the pipeline.

Another known method uses a flanged coupling constructed of a material of negative coefficient of expansion, ie a material which contracts with increasing temperature. With this second method, said coupling is lowered to the temperature of liquid nitrogen, ie about -196° and is then mounted on the pipe, after which the temperature is allowed to return to ambient, by which the coupling contracts, to press and hence adhere as a perfect seal against said pipe. The joint obtained by this method is highly efficient both with regard to pressure, in that the seal extends along the entire length of the coupling, and with regard to axial stresses in that the strong adhesion between the coupling and pipe prevents any axial slippage, however it is immediately evident that such a method is certainly not a practical, rapid or economical way of obtaining a joint, especially when this has to be made at the said sea depth. Moreover the pressure which the coupling can exert on the pipe from the outside is limited by instability of the cross-section of the pipe itself, and consequently the adhesion force between the coupling and pipe is also limited.

Again, this method also has the drawback of always generating a greater or lesser degree of pipe contraction or shrinkage, this being deleterious in pipelines used for oil or gas in that it could impede the necessary travel therethrough of the well known pigs, ie trolleys equipped for internally cleaning the pipeline or for checking the pipeline mechanical characteristics.

According to a further method known in the art, use is made of a special coupling already provided in its interior with seal and anti-slippage elements which are hydraulically pressed onto the pipe. Although this latter method can be applied quickly and fairly comfortably even at great depth, it has various drawbacks.

Besides the fact of not being cheap, given the high cost of the coupling, it provides an inadequate seal with time, because this is provided by elastomer seal elements which are subject to ageing. Moreover, in this case the pressure which the anti-slippage elements can exert on the pipe from the outside is again limited by the instability of the pipe cross-section, with the consequence that the force preventing slippage between this particular coupling and the pipe is limited.

All the aforesaid drawbacks have been previously overcome by the present applicant by providing a particular method by which the sealed joint between a flanged coupling and a pipe can be made effectively, quickly, economically and easily even at great depth, without causing contraction or shrinkage of the pipeline.

This method is described in Italian patent applications No. 21811 A/80 dated 06.05.1980 and No. 20046 A/84 dated 14.03.1984.

As is well known, according to the method of said patent applications, a cylindrical coupling with its inner surface shaped with a succession of recesses and toothings is sealedly fixed to a steel pipeline by successive steps involving shaping the inner surface of the coupling with a succession of recesses and toothings and filling each recess in the coupling with two half-rings formed of a material which is practically indeformable or of practically negligible deformation at normal pressure (but collapses with drastic variation in its volume, minus than 70%, at high pressure of the order of 300 kg/cm²) then inserting into the resultant assembly a special hard rubber plug-type expander of annular cross-section mounted idly on a special steel shaft and enclosed between two nylon anti-extrusion rings also mounted idly on said shaft, into a circumferential V-shaped groove between each of the opposing frontal faces of which there being inserted respectively the circumferentially tapered lateral ends of said plug, after which said hard rubber plug is axially compressed by acting on said nylon rings, to radially expand said pipeline-coupling assembly to the elastic deformation limit of the coupling material, which is greater than that of the pipeline, then decompressing said plug and extracting it from the pipeline.

It is clear that by using the axially compressed rubber plug to radially expand the pipeline-coupling assembly, the pressure distribution over the pipeline-coupling assembly is not uniform.

Consequently the pipeline and the coupling deform to a greater extent in the central part and to a lesser extent in the vicinity of the ends of the coupling. The pipeline hence penetrates less into the lateral recesses in the coupling so reducing the pressure seal of the joint and making it less reliable.

The object of the present invention is precisely to obviate said drawback by providing a method which enables a coupling with a toothed inner surface to be sealedly joined to pipeline in a more effective manner, even at great sea depth, by obtaining a uniform pressure distribution over the pipeline-coupling assembly.

This is substantially attained in that the pressure necessary for radially expanding the pipeline-coupling assembly as far as the elastic deformation limit of the coupling while the pipeline deforms plastically is provided by water or another liquid pumped to very high pressure into a sealed chamber suitably provided within the pipeline in correspondence with the coupling to be joined.

Hence the method for sealedly joining a coupling to an underwater pipeline laid at great depth, comprising the successive steps of mounting the coupling on the free end of said pipeline and radially expanding said pipeline-coupling assembly to the elastic deformation limit of the coupling material, which is greater than that of the pipeline, is characterised according to the present invention in that said radial expansion of the pipeline-coupling assembly is obtained by creating within the pipeline a sealed chamber in correspondence with the coupling to be joined, and pumping water or another liquid into said chamber to very high pressure.

The use of said method according to the invention means that the pressure distribution over the pipeline-coupling assembly becomes uniform. The pipeline consequently penetrates uniformly into the recesses in the coupling, to increase the pressure seal of the joint and make it more reliable.

It is apparent that given its great simplicity of application, the method of the present invention for generating the necessary radial expansion pressure can be effectively and economically used for oil and gas pipelines laid at great sea depth.

The invention is described in detail hereinafter with reference to the accompanying drawing, which illustrates a preferred embodiment thereof by way of non-limiting example in that technical, technological and constructional modifications can be made thereto without leaving the scope of the present invention.

In said drawing:

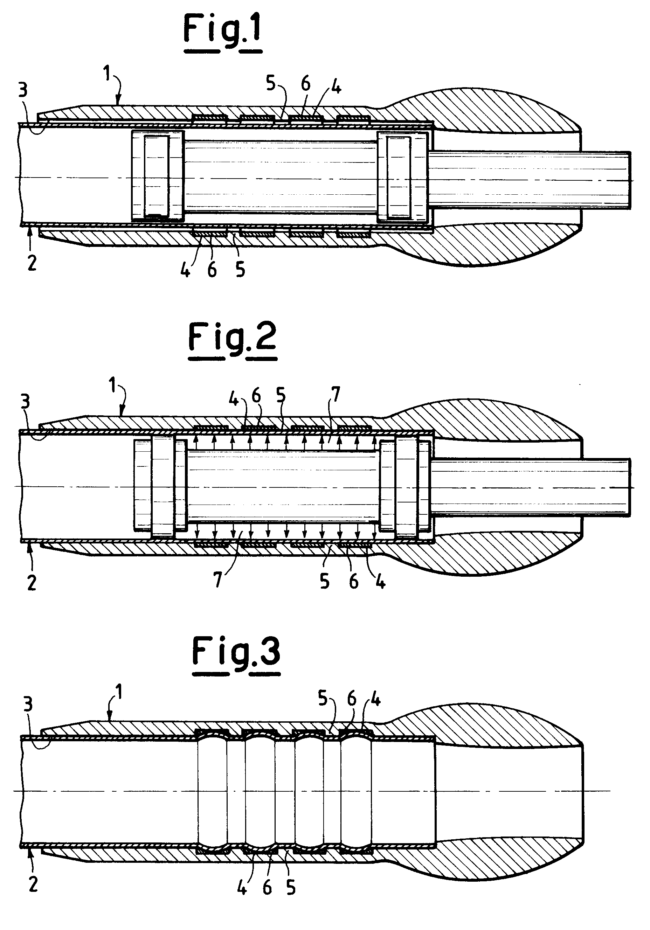

Figure 1 is a longitudinal section through the end of a pipeline on which the flanged coupling to be sealedly joined thereto has been mounted with a certain slack, and into which there has been inserted one of the possible devices for creating within the pipeline a sealed chamber, according to the invention;
Figure 2 is a longitudinal section, similar to Figure 1, taken during the radial expansion of the pipeline-coupling assembly caused by the compression of water or another liquid at very high pressure within said sealed chamber, according to the invention;
Figure 3 is a longitudinal section through the final configuration assumed by the pipeline-coupling assembly after its elastic return from its position of maximum radial expansion.

In the figures the reference numeral 1 indicates a coupling to be sealedly joined to an underwater pipeline 2 laid at great depth.

For this purpose, on the inner surface of the coupling 3, which is constructed of a material having a higher elastic deformation limit than the material with which the pipeline 2 is constructed, there is formed a succession of recesses 4 and toothings 5, each recess 4 then being filled with two half-rings 6.

The coupling prepared in this manner is then lowered to the deep sea bed and mounted on the end of said underwater pipeline 2. The pipeline-coupling assembly is then expanded radially by means of a suitable device arranged to create a sealed chamber 7 within the pipeline.

The pipeline-coupling assembly is expanded to the elastic deformation limit of the material of the coupling 1, so that the pipeline 2 becomes plastically deformed into the recesses 4 of the coupling 1.

Said device is finally deactivated and withdrawn so that the elastic return of the coupling creates the desired seal with the underlying pipeline 2.

## Claims

1. A method for sealedly joining a coupling to an underwater pipeline laid at great depth, comprising the steps of mounting a coupling on the free end of said pipeline, creating within the pipeline a sealed chamber in correspondence with the coupling to be joined, pumping water or another liquid into said chamber to very high pressure to generate a radial expansion pressure, continuing said compression to radially expand the pipeline-coupling assembly until the coupling is brought to its elastic deformation limit while the pipeline deforms plastically, and finally lowering the pressure within the chamber.
